# EUROPEAN PATENT APPLICATION

(11) **EP 4 072 078 A1**
(43) Date of publication of application: **12.10.2022**
(21) Application number: 20896384.3
(22) Date of filing: 24.09.2020
(51) Int. Cl.: H04L 12/70, H04L 12/701

(54) **DELIVERY CONTROL DEVICE, DELIVERY CONTROL METHOD, AND DELIVERY CONTROL PROGRAM**

(30) Priority: 06.12.2019 JP 2019220923
(71) Applicant: Sony Interactive Entertainment Inc., Tokyo 108-0075 (JP)
(72) Inventor: SHIMA, Koji, Tokyo 108-0075 (JP); MITSUHASHI, Hikaru, Tokyo 108-0075 (JP)
(74) Representative: D Young & Co LLP
(86) International application number: PCT/JP2020/036078
(87) International publication number: WO 2021/111710

(57) **Abstract**

Provided is a delivery control apparatus, a delivery control method, and a delivery control program by which, even if listening port numbers are duplicate in multiple server processes, a packet that has the listening port numbers as its address can be properly delivered. A process management unit (24) detects multiple running server processes that are generated by launch of mutually different server programs and that have the same listening port number. The process management unit (24) performs control such that one server process of the detected multiple running server processes is put into an active state and the remaining server processes are put into a standby state. A reception unit (26) receives a packet that has the listening port number as its address. A delivery control unit (28) delivers the packet to the server process in the active state.

## Description

### [Technical Field]

The present invention relates to a delivery control apparatus, a delivery control method, and a delivery control program.

### [Background Art]

In a client-server system, when a client sends a packet to a server, the server receiving the packet delivers the packet to a server process having the listening port number which is a port number of an address of the packet.

### [Summary]

### [Technical Problem]

A listening port number of a server process which is generated by launch of a server program is set in advance by a developer of the server program.

Here, the developer of the server program cannot have, in advance, knowledge of the listening port number set in other server programs. Accordingly, it is possible that listening port numbers of server processes are duplicate in multiple server programs.

In this case, it is difficult to identify the server process which is a delivery destination of the packet which has a duplicate listening port number as its address.

The present invention has been made in light of the above-described problem, and one of objects thereof is to provide a delivery control apparatus, a delivery control method, and a delivery control program by which, even if listening port numbers are duplicate in multiple server processes, a packet which has the listening port numbers as its address can be properly delivered.

### [Solution to Problem]

In order to solve the above problem, a delivery control apparatus according to the present invention includes a detection unit configured to detect multiple running server processes that are generated by launch of mutually different server programs and that have the same listening port number, a process control unit configured to perform control such that one server process of the detected multiple running server processes is put into an active state and a remaining server process is put into a standby state, a reception unit configured to receive a packet that has the listening port number as its address, and a delivery control unit configured to deliver the received packet to the server process in the active state.

According to one aspect of the present invention, the delivery control apparatus further includes a socket management data storage unit configured to store socket management data in which a transmission source of a packet is related to the server process that is a delivery destination of the packet, and the delivery control unit delivers a packet received from a transmission source not registered in the socket management data to the server process in the active state. According to this aspect of the present invention, the delivery control unit may discard a packet received from a transmission source that is related to the server process in the standby state in the socket management data.

In this case, if the packet is a transmission control protocol reset (TCP RST) packet, the delivery control unit may deliver the packet to the server process instead of discarding the packet.

In addition, if the packet is a TCP finish (FIN) packet, the delivery control unit may also deliver to the server process the packet and a subsequent packet that has the same transmission source, instead of discarding the packets.

Further, according to another aspect of the present invention, when a new server process is generated, the process control unit performs control such that the new server process is put into the active state, and makes the server process in the active state that has the same listening port number as the new server process transition to the standby state.

Further, according to another aspect of the present invention, the process control unit, according to designation of the server process in the standby state, makes the designated server process transition to the active state and makes the server process in the active state that has the same listening port number as the designated server process transition to the standby state.

Further, a delivery control method according to the present invention includes a step of detecting multiple running server processes that are generated by launch of mutually different server programs and that have the same listening port number, a step of performing control such that one server process of the detected multiple running server processes is put into an active state and a remaining server process is a put into a standby state, a step of receiving a packet that has the listening port number as its address, and a step of delivering the received packet to the server process in the active state. Furthermore, a delivery control program according to the present invention causes a computer to execute a procedure of detecting multiple running server processes that are generated by launch of mutually different server programs and that have the same listening port number, a procedure of performing control such that one server process of the detected multiple running server processes is put into an active state and a remaining server process is put into a standby state, a procedure of receiving a packet that has the listening port number as its address, and a procedure of delivering the received packet to the server process in the active state.

### [Brief Description of Drawings]

[FIG. 1]

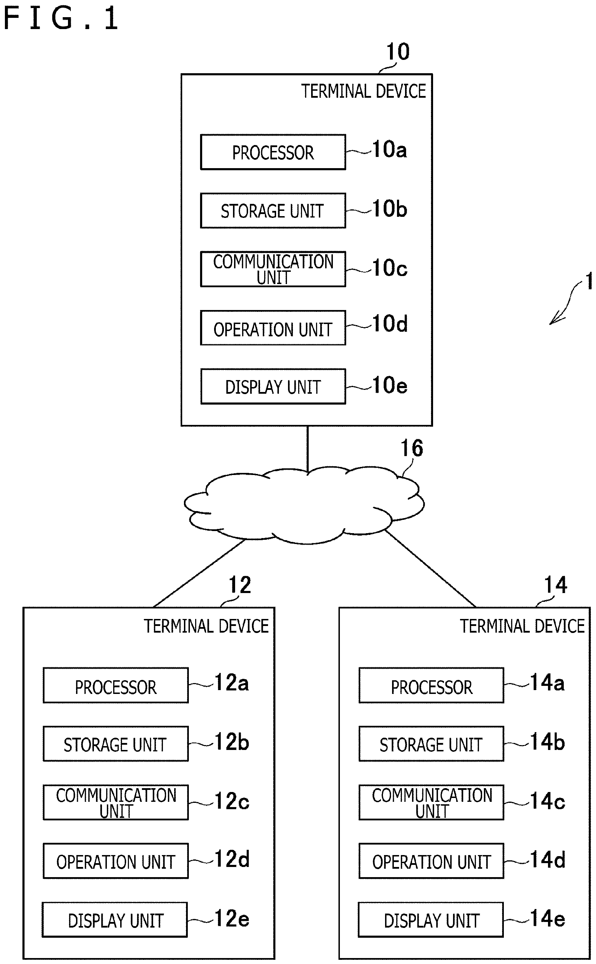

   FIG. 1 is a diagram illustrating an example of the entire configuration of an embodiment of the present invention.
[FIG. 2]

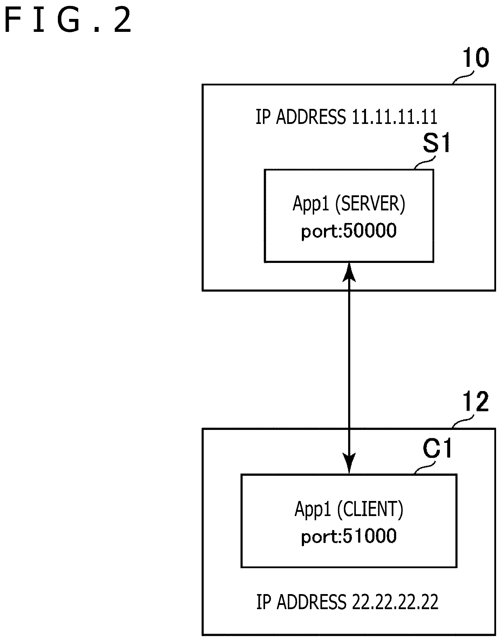

   FIG. 2 is a schematic diagram illustrating an example of communication according to the embodiment.
[FIG. 3]

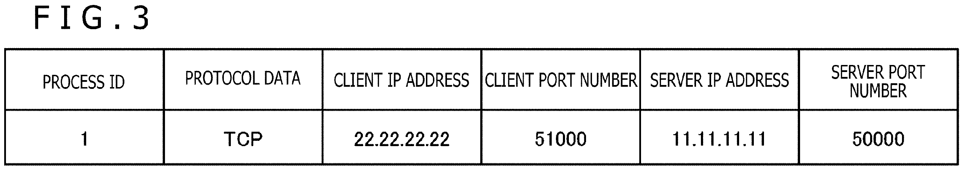

   FIG. 3 is a diagram illustrating an example of socket management data.
[FIG. 4]

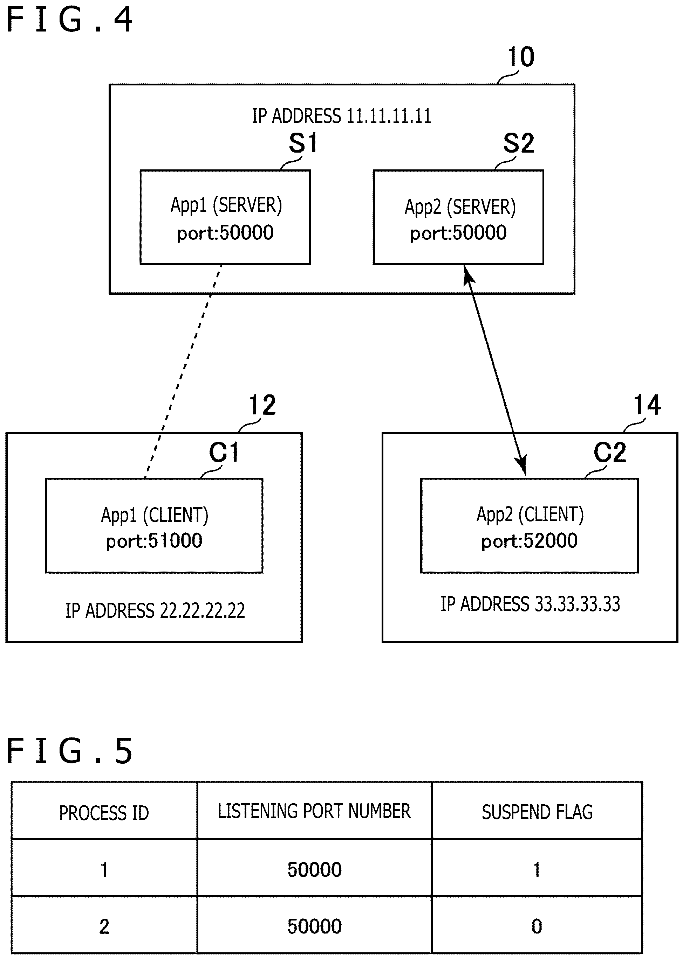

   FIG. 4 is a schematic diagram illustrating an example of communication according to the embodiment.
[FIG. 5]
   FIG. 5 is a diagram illustrating an example of suspend management data.
[FIG. 6]

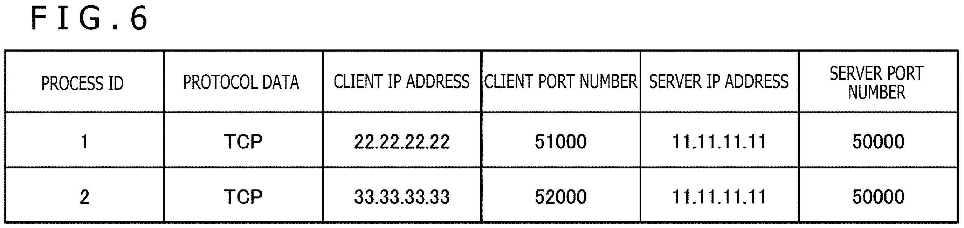

   FIG. 6 is a diagram illustrating an example of socket management data.
[FIG. 7]

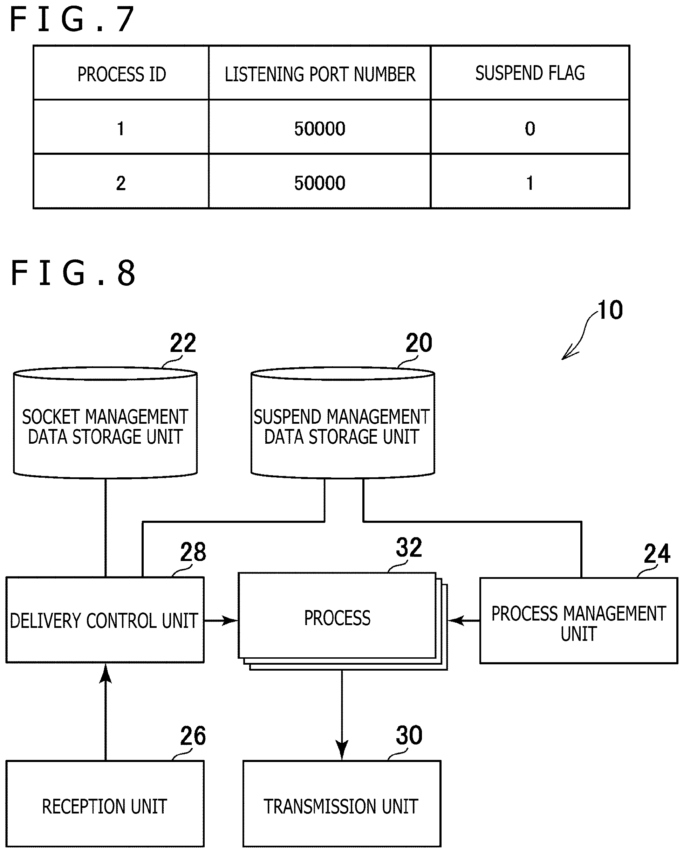

   FIG. 7 is a diagram illustrating an example of suspend management data.
[FIG. 8]
   FIG. 8 is a functional block diagram illustrating an example of functions of a terminal device according to an embodiment of the present invention.
[FIG. 9]

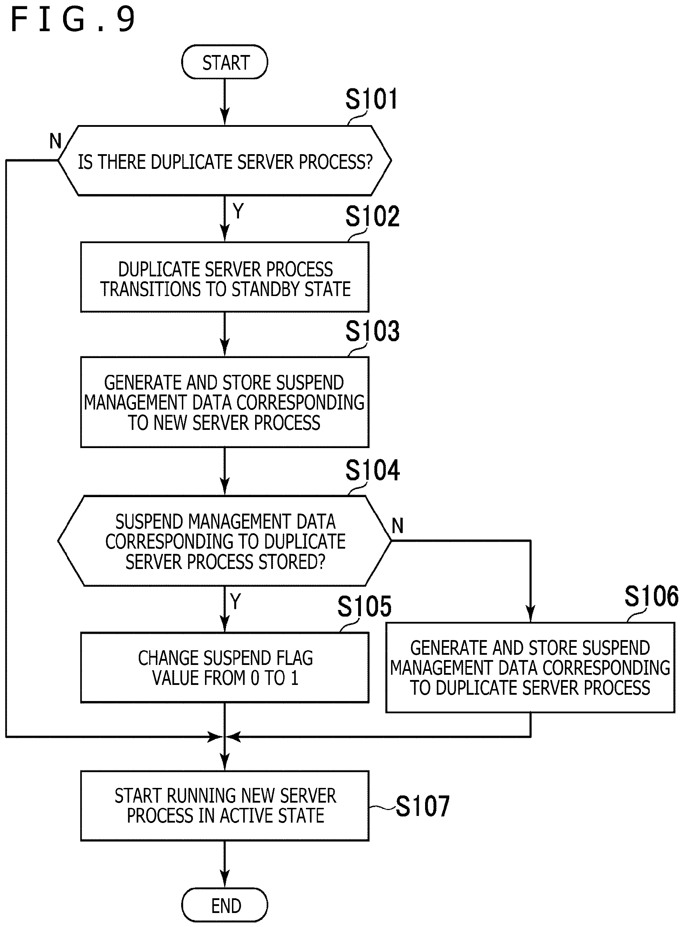

   FIG. 9 is a flowchart illustrating an example of a flow of processes to be performed in a terminal device according to an embodiment of the present invention.
[FIG. 10A]

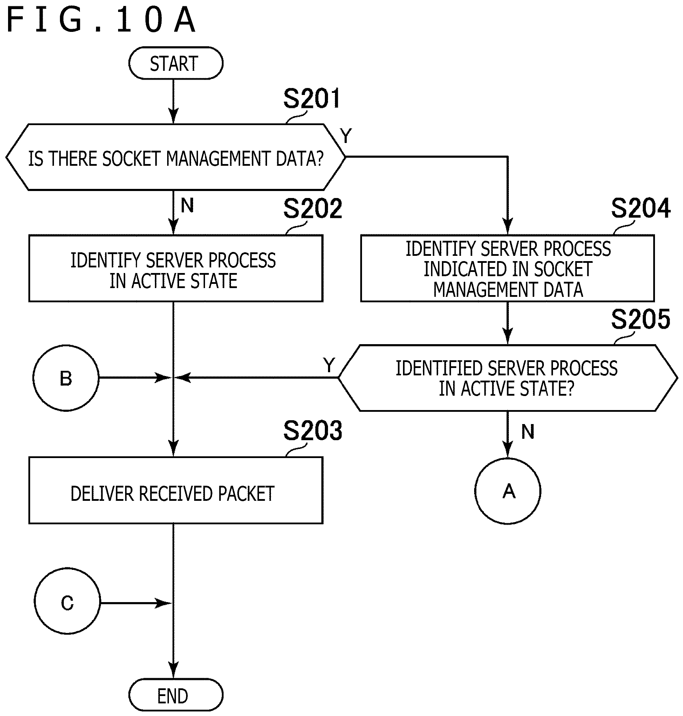

   FIG. 10A is a flowchart illustrating an example of a flow of processes to be performed in a terminal device according to an embodiment of the present invention.
[FIG. 10B]

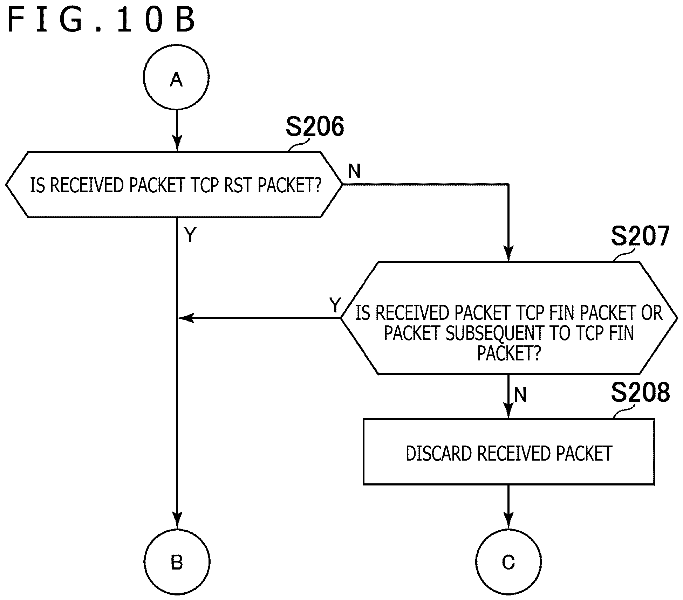

   FIG. 10B is a flowchart illustrating an example of a flow of processes to be performed in a terminal device according to an embodiment of the present invention.

### [Description of Embodiment]

Hereinafter, an embodiment of the present invention will be described in detail in reference to the figures.

FIG. 1 is a diagram illustrating an example of the entire configuration of a game system 1 according to an embodiment of the present invention. As illustrated in FIG. 1, the game system 1 according to the embodiment includes a terminal device 10, a terminal device 12, and a terminal device 14. The terminal device 10, the terminal device 12, and the terminal device 14 are connected to a computer network 16 such as the internet. Hence, the terminal device 10, the terminal device 12, and the terminal device 14 can communicate with one another through the computer network 16.

As illustrated in FIG. 1, the terminal device 10 includes, for example, a processor 10a, a storage unit 10b, a communication unit 10c, an operation unit 10d, and a display unit 10e. The terminal device 12 includes, for example, a processor 12a, a storage unit 12b, a communication unit 12c, an operation unit 12d, and a display unit 12e. The terminal device 14 includes, for example, a processor 14a, a storage unit 14b, a communication unit 14c, an operation unit 14d, and a display unit 14e.

The processor 10a, the processor 12a, and the processor 14a are each program control devices such as microprocessors which, for example, operate according to programs installed in the terminal device 10, the terminal device 12, and the terminal device 14.

The storage unit 10b, the storage unit 12b, and the storage unit 14b are, for example, storage devices such as a read only memory (ROM) and a random access memory (RAM), a solid state drive (SSD), or the like. The storage unit 10b, the storage unit 12b, and the storage unit 14b each have stored therein programs or the like which are executed by the processor 10a, the processor 12a, and the processor 14a.

The communication unit 10c, the communication unit 12c, and the communication unit 14c are, for example, communication interfaces such as a wireless local area network (LAN) module. The communication unit 10c sends/receives data to/from the terminal device 12 and the terminal device 14 through the computer network 16. The communication unit 12c sends/receives data to/from the terminal device 10 and the terminal device 14 through the computer network 16. The communication unit 14c sends/receives data to/from the terminal device 10 and the terminal device 12 through the computer network 16.

The operation unit 10d, the operation unit 12d, and the operation unit 14d are operation members such as buttons and touch sensors which output contents of operation performed by users, for example, to the processor 10a, the processor 12a, and the processor 14a, respectively. The display unit 10e, the display unit 12e, and the display unit 14e are displays, for example, such as liquid crystal displays or organic electroluminescence (EL) displays.

In the embodiment, for example, multiple game programs can be run in the terminal device 10. However, the number of game programs that are in an active state among the multiple running game programs is limited to one, and the remaining game programs are controlled to be in a standby state (suspend state). Hence, in the embodiment, it is unnecessary to perform a quality assurance task (QA task) for game programs that takes into account that multiple game programs are simultaneously in the active state.

When a running game program transitions from the active state to the standby state, state data which indicates an execution state of the game program stored in a working memory, a register, or the like is saved in a save area provided on a memory or an SSD of the storage unit 10b. Further, when the game program returns from the standby state to the active state (resumes), the state data saved in the save area is returned to the original location.

Further, communication which is carried out while the game program is in the active state is interrupted when the game program transitions to the standby state. In addition, when the game program returns from the standby state to the active state, the interrupted communication resumes.

The above is also similar for the terminal device 12 and the terminal device 14.

Further, the game program according to the embodiment is a program for a multiplayer game and is provided with a client function and a server function. In addition, the game program according to the embodiment is enabled to operate in an operation mode, i.e., either a server mode to function as a server or a client mode to function as a client.

In the embodiment, for example, by launch of a game program in the server mode, a server process corresponding to the game program is generated. In the embodiment, for example, a developer of the game program sets in advance a listening port number to which the server process corresponding to the game program is to be bound.

Also in the embodiment, for example, by launch of a game program in the client mode, a client process corresponding to the game program is generated. In the embodiment, for example, a system program such as an operating system dynamically determines a port number of a port to which the client process corresponding to the game program is to be bound, from among available port numbers.

Hereinafter, an example of operation of the game system 1 according to the embodiment will be described. In the following description, users of the terminal device 10, the terminal device 12, and the terminal device 14 will be called a user A, a user B, and a user C, respectively. It is also assumed that internet protocol (IP) addresses set for the terminal device 10, the terminal device 12, and the terminal device 14 are 11.11.11.11, 22.22.22.22, and 33.33.33.33, respectively.

In this operation example, first, as illustrated in FIG. 2, the terminal device 10 launches a game program Appl in the server mode. As a result, a server process S1 is generated in the terminal device 10. Then, the server process S1 starts running in the active state. As illustrated in FIG. 2, the server process S1 is bound to a port number 50000. As described above, the port number 50000 to which the server process S1 is bound is determined in advance by the game program Appl. Then, the terminal device 12 launches the game program Appl in the client mode. As a result, a client process C1 is generated in the terminal device 12. Then, the client process C1 starts running in the active state. As illustrated in FIG. 2, the client process C1 is bound to a port number 51000. As described above, the port number 51000 to which the client process C1 is bound is dynamically assigned to the client process C1 by a system program operating in the terminal device 12.

Further, through communication between the terminal device 10 and the terminal device 12, the user A and the user B can enjoy a multiplayer game provided by the game program Appl. Upon receiving a packet that has the port number 50000 of the terminal device 10 as its address while the game is being played, the terminal device 10 stores the packet in a socket buffer of the server process S1 which socket buffer is dynamically secured in a kernel memory by the terminal device 10. Then, the server process S1 executes processes according to data included in the packet. In this way, the packet is delivered to the server process S1 in the active state.

FIG. 3 is a diagram illustrating an example of socket management data in which a transmission source of a packet is related to a server process which is a delivery destination of the packet. The socket management data illustrated in FIG. 3 is registered in the terminal device 10 when the terminal device 10 receives the first TCP packet that has the number 51000 port of the terminal device 12 as its transmission source and that has the number 50000 port of the terminal device 10 as its address, for example. The socket management data includes, for example, a process identification (ID), protocol data, a client IP address, a client port number, a server IP address, and a server port number. In this way, the socket management data according to the embodiment relates a communication channel that is identified by a combination of a socket of the server and a socket of the client to the server process which is a delivery destination of the packet communicated
through the communication channel.

For the process ID included in the socket management data, a process ID that is identification information of a process related to that socket management data is set. Here, it is assumed that a process ID for the server process S1 is 1.

The protocol data included in the socket management data is data indicating a protocol type used for communication through the communication channel corresponding to the socket management data. Examples of values of such protocol data include "TCP" and "user datagram protocol (UDP)."

For the client IP address and the client port number of the socket management data, an IP address and a port number of the client related to the socket management data are each set. Further, for the server socket IP address and the server socket port number of the socket management data, an IP address and a port number of the server corresponding to the socket management data are each set.

In the example illustrated in FIG. 3, the IP address and the port number of the terminal device 12, which is a communication partner of the terminal device 10, are each set to values of the client IP address and the client port number of the socket management data. Further, the IP address and the port number of the terminal device 10 are each set to values of the server IP address and the server port number of the socket management data.

Incidentally, according to the establishment of a communication channel by a handshake, socket management data corresponding to the established communication channel may be registered.

After a series of communication between the terminal device 10 and the terminal device 12 has been made, as illustrated in FIG. 4, it is assumed that a game program App2 is launched in a server mode and a server process S2 is generated in the terminal device 10, by the user A operating the terminal device 10. In this instance, the server process S1 that is in the active state transitions to the standby state. Then, the server process S2 starts running in the active state. It is also assumed that the game program App2 is launched in a client mode and a client process C2 is generated in the terminal device 14.

Then, the client process C2 starts running in the active state.

It is assumed here, for example, that a port number set in advance in the game program App2 is 50000 and the server process S2 is bound to the port number 50000 similarly to the server process S1. It is also assumed that the client process C2 is bound to the port number 52000 dynamically assigned to the client process C2 by a system program operating in the terminal device 14.

Further, through communication between the terminal device 10 and the terminal device 14, the user A and the user C can enjoy a multiplayer game provided by the game program App2.

In the embodiment, for example, a kernel operating in the terminal device 10 detects multiple running server processes that are generated by launch of mutually different server programs and that have the same listening port number. Further, according to the detection, suspend management data illustrated as an example in FIG. 5, which is used to perform management as to whether the multiple running processes are in the active state or in the standby state, is generated.

The suspend management data includes, for example, process IDs which are identification information of the server processes running in the terminal device 10, the listening port numbers of the server processes, and suspend flags thereof. It is assumed here that a process ID of the server process S1 is 1, as described above. It is also assumed that a process ID of the server process S2 is 2.

For the suspend flag included in the suspend management data, a value indicating whether the server process corresponding to the suspend management data is in the active state or in the standby state is set. For example, when a server process corresponding to the suspend management data is in the active state, a value 0 is set for a suspend flag included in the suspend management data. Further, when a server process corresponding to the suspend management data is in the standby state, a value 1 is set for a suspend flag included in the suspend management data.

When the server process S2 is generated in the terminal device 10 and the server process S1 which is in the active state transitions to the standby state, suspend management data having a process ID value of 1 and suspend management data having a process ID value of 2 are registered in the terminal device 10, as illustrated in FIG. 5. Here, a value of the suspend flag of the suspend management data having the process ID value of 1 is set to 1. In addition, a value of the suspend flag of the suspend management data having the process ID value of 2 is set to 0.

It is assumed that the terminal device 10 receives from the terminal device 14 a packet that has the port number 52000 of the terminal device 14 as its transmission source and the port number 50000 of the terminal device 10 as its address, when a game provided by the game program App2 is being played. It is further assumed in this instance that socket management data including an IP address and a port number of the terminal device 14 is not registered in the terminal device 10, as illustrated in FIG. 3.

In this case, in the embodiment, the terminal device 10 determines a server process in the active state (here, the server process S2) that is identified in reference to the suspend management data illustrated in FIG. 5, as a delivery destination of the above-described received packet. Then, the terminal device 10 stores the above-described received packet in a socket buffer of the server process S2 determined in the manner described above. The socket buffer is dynamically secured in the kernel memory by the terminal device 10. Then, the server process S2 executes processes according to the data included in the packet. In this way, the packet is delivered to the server process S2 in the active state.

As described above, a listening port number of a server process generated by launch of a server program is set in advance by a developer of the server program. Here, the developer of the server program is unable to have, in advance, knowledge of a listening port number set in other server programs. Therefore, it is possible that listening port numbers of server processes are duplicate in multiple server programs.

In the embodiment, even if the listening port numbers are duplicate in the multiple server processes, one server process is controlled to be put into the active state and the remaining server processes are controlled to be put into the standby state. Then, the packet that is received by the terminal device 10 and has the duplicate listening port numbers as its address is delivered to the server process in the active state. In this way, in the embodiment, even if the listening port numbers are duplicate in the multiple server processes, the packet that has the listening port numbers as its address can be properly delivered.

In the embodiment, it is also assumed that the terminal device 10 receives a packet which has the port number 51000 of the terminal device 12 as its transmission source and the port number 50000 of the terminal device 10 as its address, when the server process S1 is in the standby state. It is further assumed in this instance that the socket management data that is illustrated in FIG. 3 and in which the port number 51000 of the terminal device 12 is related to the server process S1 is registered in the terminal device 10.

In this case, in the embodiment, the terminal device 10 discards the received packet instead of delivering the packet to the server process S1 in the standby state. In this case, the packet is not stored in the socket buffer of the server process S1. In this way, according to the embodiment, memory usage of the kernel memory can be suppressed.

In the embodiment, when the terminal device 10 receives the first TCP packet which has the number 52000 port of the terminal device 14 as its transmission source and which has the number 50000 port of the terminal device 10 as its address, new socket management data having a process ID value of 2 is registered in the terminal device 10 as illustrated in FIG. 6.

It is assumed that, thereafter, the server process S1 in the standby state returns to the active state and the server process S2 in the active state transitions to the standby state, by the user A operating the terminal device 10. Then, as illustrated in FIG. 7, the value of the suspend flag of the suspend management data having the process ID value of 1 is changed to 0, and the value of the suspend flag of the suspend management data having the process ID value of 2 is changed to 1.

As such, the user A and the user B can resume a multiplayer game provided by the game program Appl. In addition, the communication between the terminal device 10 and the terminal device 12 that has been interrupted when the server process S1 had been in the standby state is also resumed. Accordingly, if the server process S1 resumes within such a period of time (for example, 60 seconds) that transmission of a TCP RST packet (reset packet), which would be performed in the case of unavailability of communication, is not performed by the terminal device 12, for example, the user experience of the user A and the user B can be maintained.

In the embodiment, it is assumed that, when the server process S1 is in the standby state, the terminal device 10 receives the TCP RST packet from a transmission source which is related to the server process S1 in the standby state in the socket management data. In this case, the terminal device 10 may deliver the packet to the server process S1 in the standby state, instead of discarding the packet.

The TCP RST packet is stored in the socket buffer of the server process S1 until the server process S1 resumes. Further, when the server process S1 resumes, the server process S1 carries out a process to terminate (reset) the communication with the communication partner, on the basis of the TCP RST packet stored in the socket buffer.

As a result, it becomes possible for the server process S1 to immediately recognize that the server process S1 should reset the communication with the communication partner, when the server process S1 resumes. Therefore, a resource used to listen for a packet from the communication partner that has transmitted the TCP RST packet can be saved.

In addition, in the embodiment, it is also assumed that, when the server process S1 is in the standby state, the terminal device 10 receives a TCP FIN packet (finish packet) from a transmission source which is related to the server process S1 in the standby state in the socket management data. In this case, the terminal device 10 may deliver the packet as well as a subsequent packet which has the same transmission source, instead of discarding the packets, to the server process S1 in the standby state.

These packets are stored in the socket buffer of the server process S1 until the server process S1 resumes. Further, when the server process S1 resumes, the server process S1 can receive all of the packets transmitted from the communication partner, on the basis of the packets stored in the socket buffer, and terminate the communication with the communication partner.

Hereinafter, functions of the terminal device 10 according to the embodiment and a process to be carried out in the terminal device 10 will further be described.

FIG. 8 is a functional block diagram illustrating an example of functions implemented in the terminal device 10 according to the embodiment. Incidentally, all of the functions illustrated in FIG. 8 do not have to be implemented in the terminal device 10 according to the embodiment, and functions other than the functions illustrated in FIG. 8 may be implemented.

As illustrated in FIG. 8, described in terms of functions, for example, the terminal device 10 includes a suspend management data storage unit 20, a socket management data storage unit 22, a process management unit 24, a reception unit 26, a delivery control unit 28, and a transmission unit 30.

The suspend management data storage unit 20 and the socket management data storage unit 22 are implemented mainly for the storage unit 10b. The process management unit 24 and the delivery control unit 28 are implemented mainly for the processor 10a. The reception unit 26 and the transmission unit 30 are implemented mainly for the communication unit 10c.

These functions may be implemented by the processor 10a running a program that is installed in the terminal device 10, which is a computer, and that includes instructions corresponding to these functions. This program may be supplied to the terminal device 10 via computer-readable information storage media such as an optical disc, a magnetic disc, a magnetic tape, a magneto-optical disc, or a flash memory or via the internet or the like.

Further, a process(es) 32 such as the above-described server process S1 or server process S2 is also carried out in the terminal device 10. In the embodiment, for example, the suspend management data storage unit 20 stores the suspend management data illustrated as an example in FIGS. 5 and 7.

In the embodiment, for example, the socket management data storage unit 22 stores the socket management data illustrated as an example in FIGS. 3 and 6.

In the embodiment, for example, the process management unit 24 manages the process(es) 32 carried out in the terminal device 10. A function of the process management unit 24 is implemented in a kernel of an operating system, for example. The process management unit 24 launches or stops the process(es) 32, for example.

Further, the process management unit 24 also detects multiple running server processes that are generated by launch of mutually different server programs and that have the same listening port number. Then, the process management unit 24 performs control such that one server process of these detected multiple running server processes is put into the active state and the remaining server processes are put into the standby state.

Here, for example, when a new server process is generated, the process management unit 24 may perform control such that the new server process is put into the active state and may make a server process in the active state that has the same listening port number as the new server process transition to the standby state.

For example, it is assumed that a new server process is generated by the process management unit 24 launching a server program. Hereinafter, the generated server process is called a new server process. In this case, the process management unit 24 checks whether or not there is any server process which is in the active state and has the same listening port number as the new server process. Hereinafter, such a server process is called a duplicate server process. Here, if there is such a duplicate server process, the duplicate server process is made to transition to a standby state. Further, the process management unit 24 starts running the new server process in the active state.

Incidentally, there is no problem even if there is a server process in the active state that has a listening port number different from that of the new server process. In this case, both the server process and the new server process are in the active state.

Further, according to designation of a server process in the standby state, the process management unit 24 may make the designated server process transition to the active state and make a server process in the active state that has the same listening port number as the designated server process transition to the standby state.

For example, according to an operation by the user for designating a server process in the standby state, the designated server process is made to transition to the active state. In this instance, the process management unit 24 makes a server process in the active state that has the same listening port number as the server process which has returned to the active state transition to the standby state. In this way, multiple running server processes that have the same listening port number are controlled such that one of the server processes of them is put into the active state and the remaining server processes are put into the standby state.

The process management unit 24 also generates suspend management data according to detection of the multiple running server processes that have the same listening port number as described above. Further, the process management unit 24 makes the generated suspend management data stored in the suspend management data storage unit 20. For example, when presence of the above-described duplicate server processes is confirmed, such suspend management data may be generated.

The process management unit 24 also carries out management of the suspend management data such as addition, deletion, and update of the suspend management data stored in the suspend management data storage unit 20, according to changes of the state(s) of the process(es) 32. For example, when a server process transitions from the active state to the standby state, a value of the suspend flag of the suspend management data corresponding to the server process is changed from 0 to 1. On the other hand, when a server process transitions from the standby state to the active state, a value of the suspend flag of the suspend management data corresponding to the server process is changed from 1 to 0.

In the embodiment, for example, the reception unit 26 receives a packet transmitted from the terminal device 12 or the terminal device 14.

In the embodiment, for example, the delivery control unit 28 performs controls as to which server process the packet received by the reception unit 26 is to be delivered. A function of the delivery control unit 28 is implemented in the kernel of the operating system, for example. The delivery control unit 28 delivers, for example, a packet that has the duplicate listening port numbers of the multiple server processes as its address to the server process in the active state. Here, for example, the delivery control unit 28 may deliver a packet received from a transmission source not registered in the socket management data to the server process in the active state. Further, in association with occurrence of communication that uses a new communication channel, the delivery control unit 28 also generates socket management data corresponding to the new communication channel. Then, the delivery control unit 28 makes the generated socket management data stored in the socket management data storage unit 22. The delivery control unit 28 may discard a packet received from a transmission source which is related to the server process in the standby state in the socket management data.

Here, as described above, in a case where the packet received from the transmission source that is related to the server process in the standby state in the socket management data is a TCP RST packet, the delivery control unit 28 may deliver the packet to the server process instead of discarding the packet.

As described above, in a case where the packet received from the transmission source that is related to the server process in the standby state in the socket management data is a TCP FIN packet, the delivery control unit 28 may also deliver the packet to the server process instead of discarding the packet. In this case, the delivery control unit 28 may also deliver a subsequent packet which has the same transmission source to the server process, instead of discarding the packet.

In the embodiment, for example, the transmission unit 30 transmits a packet which the process(es) 32 running in the terminal device 10 outputs, to the terminal device 12 or the terminal device 14, which is the transmission source.

Here, an example of a flow of processes to be performed, when a new server process (new server process) is generated by the terminal device 10 according to the embodiment launching a server program, will be described, referring to a flowchart illustrated as an example in FIG. 9.

First, the process management unit 24 checks whether or not there is any server process (duplicate server process) which is in the active state and has the same listening port number as the new server process (S101).

When the presence of such a duplicate server process is confirmed (S101: Y), the process management unit 24 makes the confirmed duplicate server process transition to the standby state (S102).

Then, the process management unit 24 generates suspend management data corresponding to the new server process and makes the generated suspend management data stored in the suspend management data storage unit 20 (S103). A value of the suspend flag of the suspend management data is set to 0.

Subsequently, the process management unit 24 checks whether or not suspend management data corresponding to the duplicate server process is stored in the suspend management data storage unit 20 (S104).

If such suspend management data is stored (S104: Y), the process management unit 24 changes the value of the suspend flag of the suspend management data from 0 to 1 (S105).

If such suspend management data is not stored (S104: N), the process management unit 24 generates suspend management data corresponding to the duplicate server process. Then, the process management unit 24 makes the generated suspend management data stored in the suspend management data storage unit 20 (S106). In this case, a value of the suspend flag of the generated suspend management data is set to 1. Further, the process management unit 24 starts running the new server process in the active state (S107), and the processes indicated in the process example end.

It is assumed in a process indicated in S101 that absence of such a duplicate server process is confirmed (S101: N). In this case, too, the process management unit 24 starts running the new server process in the active state (S107), and the processes denoted in the process example end.

Next, an example of a flow of processes to be performed, when the reception unit 26 of the terminal device 10 according to the embodiment receives a packet, will be described, referring to a flowchart illustrated as an example in FIGS. 10A and 10B.

First, the delivery control unit 28 checks whether or not there is any socket management data in which an IP address and a port number of the transmission source of a packet received by the reception unit 26 are registered (S201). Here, for example, it is checked whether or not there is stored, in the socket management data storage unit 22, socket management data in which the IP address and the port number of the transmission source of the received packet are respectively set to a value of the client IP address and a value of the client port number. In a case where there is no such socket management data (S201: N), the delivery control unit 28 identifies a server process in the active state in the terminal device 10, in reference to the suspend management data stored in the suspend management data storage unit 20 (S202).

Further, the delivery control unit 28 delivers the received packet to the server process identified in the process indicated in S202 (S203), and the processes denoted in the process example end.

It is assumed that the presence of the socket management data in which the IP address and the port number of the transmission source of the packet received by the reception unit 26 are registered is confirmed in the process indicated in S201 (S201: Y). In this case, the delivery control unit 28 identifies the server process indicated in the socket management data (S204).

Then, the delivery control unit 28 checks whether or not the server process identified in the process indicated in S204 is in the active state (S205). Here, the delivery control unit 28 may check whether or not the server process identified in the process denoted in S204 is in the active state, in reference to the suspend management data stored in the suspend management data storage unit 20.

In a case where it is confirmed that the server process identified in the process denoted in S204 is in the active state (S205: Y), the delivery control unit 28 delivers the received packet to the server process identified in the process indicated in S204 (S203), and the processes indicated in the process example end.

It is assumed that it is confirmed in the process indicated in S205 that the server process identified in the process indicated in S204 is in the standby state (S205: N). In this case, the delivery control unit 28 checks whether or not the received packet is a TCP RST packet (S206).

In a case where the received packet is a TCP RST packet (S206: Y), the delivery control unit 28 delivers the received packet to the server process identified in the process indicated in S204 that is in the standby state (S203), and the processes indicated in the process example end.

It is assumed that it is confirmed in the process indicated in S206 that the received packet is not a TCP RST packet (S206: N). In this case, the delivery control unit 28 checks whether or not the received packet is a TCP FIN packet or a packet subsequent to the TCP FIN packet (S207).

It is assumed that it is confirmed in the process indicated in S207 that the received packet is a TCP FIN packet or a packet subsequent to the TCP FIN packet (S207: Y). In this case, the delivery control unit 28 delivers the received packet to the server process identified in the process indicated in S204 that is in the standby state (S203), and the processes indicated in the process example end.

It is assumed that it is confirmed in the process indicated in S207 that the received packet is neither a TCP FIN packet nor a packet subsequent to the TCP FIN packet (S207: N). In this case, the delivery control unit 28 discards the received packet (S208), and the processes indicated in the process example end.

Incidentally, the present invention is not limited to the above-described embodiment.

The scope to which the present invention is applicable is not limited to the TCP protocol and the UDP protocol. Moreover, the scope to which the present invention is applicable is not limited to game programs. Further, the role sharing of the terminal device 10, the terminal device 12, and the terminal device 14 is not limited to the one described above. For example, the functions of the terminal device 10 may be implemented in the terminal device 12 or the terminal device 14. Alternatively, the functions of the terminal device 12 or the terminal device 14 may be implemented in the terminal device 10. That is, a client process may be carried out in the terminal device 10. A server process may also be carried out in the terminal device 12 and the terminal device 14. Both the server process and the client process may also be carried out in the terminal device 10, the terminal device 12, and the terminal device 14.

Further, the client process of the terminal device 10 and the server process of the terminal device 12 or the terminal device 14 may also communicate with each other. The client process of the terminal device 12 and the server process of the terminal device 14 may also communicate with each other. The client process of the terminal device 14 and the server process of the terminal device 12 may also communicate with each other.

Furthermore, the above specific character strings and numerical values as well as the specific character strings and numerical values in the figures are examples, and character strings and numerical values are not limited to these specific character strings and the specific numerical values.

## Claims

1. A delivery control apparatus comprising:
a detection unit configured to detect multiple running server processes that are generated by launch of mutually different server programs and that have a same listening port number;
a process control unit configured to perform control such that one server process of the detected multiple running server processes is put into an active state and a remaining server process is put into a standby state;
a reception unit configured to receive a packet that has the listening port number as its address; and
a delivery control unit configured to deliver the received packet to the server process in the active state.

2. The delivery control apparatus according to claim 1, further comprising:
a socket management data storage unit configured to store socket management data in which a transmission source of a packet is related to the server process that is a delivery destination of the packet,
wherein the delivery control unit delivers a packet received from a transmission source not registered in the socket management data to the server process in the active state.

3. The delivery control apparatus according to claim 2, wherein the delivery control unit discards a packet received from a transmission source which is related to the server process in the standby state in the socket management data.

4. The delivery control apparatus according to claim 3, wherein, in a case where the packet is a transmission control protocol reset packet, the delivery control unit delivers the packet to the server process instead of discarding the packet.

5. The delivery control apparatus according to claim 3 or 4, wherein, in a case where the packet is a transmission control protocol finish packet, the delivery control unit delivers to the server process the packet and a subsequent packet that has a same transmission source, instead of discarding the packets.

6. The delivery control apparatus according to any one of claims 1 to 5, wherein, when a new server process is generated, the process control unit performs control such that the new server process is put into the active state, and makes the server process in the active state that has a same listening port number as the new server process transition to the standby state.

7. The delivery control apparatus according to any one of claims 1 to 6, wherein the process control unit, in association with designation of the server process in the standby state, makes the designated server process transition to the active state and makes the server process in the active state that has a same listening port number as the designated server process transition to the standby state.

8. A delivery control method comprising:
a step of detecting multiple running server processes that are generated by launch of mutually different server programs and that have a same listening port number;
a step of performing control such that one server process of the detected multiple running server processes is put into an active state and a remaining server process is put into a standby state;
a step of receiving a packet that has the listening port number as its address; and
a step of delivering the received packet to the server process in the active state.

9. A delivery control program causing a computer to execute:
a procedure of detecting multiple running server processes that are generated by launch of mutually different server programs and that have a same listening port number;
a procedure of performing control such that one server process of the detected multiple running server processes is put into an active state and a remaining server process is put into a standby state;
a procedure of receiving a packet that has the listening port number as its address; and
a procedure of delivering the received packet to the server process in the active state.
